# EUROPEAN PATENT APPLICATION

(11) **EP 4 759 723 A1**
(43) Date of publication of application: **17.06.2026**
(21) Application number: 25222537.0
(22) Date of filing: 11.12.2025
(51) Int. Cl.: B64F 5/30, F01D 25/00

(54) **WASH SYSTEMS FOR GAS TURBINE ENGINES**

(30) Priority: 13.12.2024 IN 202411098694; 03.07.2025 US 202519259023
(71) Applicant: General Electric Company, Cincinnati, Ohio 45215 (US)
(72) Inventor: YAMARTHI, David Raju, 560066 Bengaluru (IN); GANIGER, Ravindra Shankar, 560066 Bengaluru (IN); KUMAR, Sandeep, 560066 Bengaluru (IN); RAMADURAI, Krishna, 560066 Bengaluru (IN); PETKAR, Kirti Arvind, 560066 Bengaluru (IN)
(74) Representative: Openshaw & Co.

(57) **Abstract**

A wash system (300A, 300B) for washing a gas turbine engine (10) includes a particulate reservoir (405) for storing a cleaning material and at least one particulate supply line (410) coupled to the particulate reservoir (405) and configured to supply the cleaning material to an engine inlet of the gas turbine engine (10). The cleaning material is at least partially in a solid state and comprises a detergent. Each particulate (450) of the cleaning material comprises a first plurality of particles (455) and a second plurality of particles (460) different from the first plurality of particles (455). The first plurality of particles (455) at least partially surrounding the second plurality of particles (460).

## Description

### CROSS-REFERENCE TO RELATED APPLIATION(S)

This application claims priority to Indian Provisional Application No. 202411098694 filed December 13, 2024, and to U.S. Utility Application No. 19/259,023 filed July 3, 2025, which are incorporated herein by reference in their entirety.

### FIELD

The present disclosure relates to wash systems for gas turbine engines, and methods for operating the same.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight. The turbomachine is mechanically coupled to the fan for driving the fan during operation.

During operation, a substantial amount of air is ingested by such gas turbine engines. Such air may contain foreign particles. While a majority of the foreign particles will follow a gas path through the engine and exit with the exhaust gases, at least a portion of these particles may stick to certain components within the gas turbine engine's gas path, potentially changing aerodynamic and/or thermal properties of the engine and reducing engine performance.

In order to remove such foreign particles from within the gas path of the gas turbine engine, a cleaning operation can be performed that directs water or other fluids towards an inlet of the gas turbine engine. However, such cleaning operations may require elongated soaking times.

Accordingly, wash systems for providing improved cleaning of a gas turbine engine would be useful. More particularly, wash systems that reduce overall cleaning time are desirable.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a gas turbine engine in accordance with an exemplary aspect of the present disclosure.
FIG. 2 is a perspective view of a modular cart that may contain certain components of an exemplary wash system in accordance with an exemplary aspect of the present disclosure.
FIG. 3A is a schematic view of the exemplary wash system of FIG. 2 in accordance with an exemplary aspect of the present disclosure.
FIG. 3B is a schematic view of the exemplary wash system of FIG. 2 in accordance with an exemplary aspect of the present disclosure.
FIG. 4 is a detailed view of a particle of a cleaning mixture of the exemplary wash system of FIGS. 3A-3B in accordance with an exemplary aspect of the present disclosure.
FIG. 5 provides a method of cleaning a gas turbine engine in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high," or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

As used herein, a "bypass ratio" of a turbine engine is a ratio of bypass air through a bypass of the turbine engine to core air through a core inlet of a turbomachine of the turbine engine. For example, the bypass ratio is a ratio of bypass air entering the bypass airflow passage to core air entering the turbomachine.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" may be used interchangeably to distinguish one component from another and are not intended to signify location or importance of the individual components.

For purposes of the description hereinafter, the terms "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

The present disclosure is generally related to wash systems for removing foreign particles from gas turbine engines. Traditional wash systems require long soaking times and may additionally require a desired temperature of cleaning fluid to be maintained. In an example embodiment, the present disclosure is directed to introducing additives, such as solid detergent particulates, along with the cleaning fluid to improve cleaning and reduce cleaning time. For example, the solid detergent particulates may weaken foreign object adherence to components of the gas turbine engine.

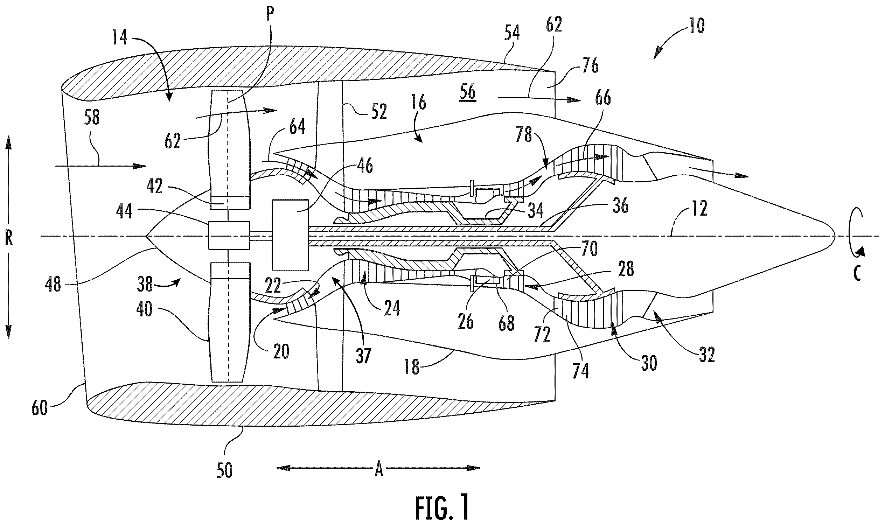

Referring now to the drawings, FIG. 1 is a schematic cross-sectional view of a gas turbine engine 10 in accordance with an exemplary embodiment of the present disclosure. More particularly, for the embodiment of FIG. 1, the gas turbine engine 10 is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft 34 (which may additionally or alternatively be a spool) drivingly connects the HP turbine 28 to the HP compressor 24. A low pressure (LP) shaft 36 (which may additionally or alternatively be a spool) drivingly connects the LP turbine 30 to the LP compressor 22. The compressor section, combustion section 26, turbine section, and jet exhaust nozzle section 32 together define a core gas flowpath 37.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gear box 46, and the fan blades 40, disk 42, and pitch change mechanism 44 are together rotatable about the longitudinal centerline 12 by LP shaft 36 across the power gear box 46. The power gear box 46 includes a plurality of gears for adjusting a rotational speed of the fan 38 relative to a rotational speed of the LP shaft 36, such that the fan 38 may rotate at a more efficient fan speed.

Referring still to the exemplary embodiment of FIG. 1, the disk 42 is covered by rotatable front hub 48 of the fan section 14 (sometimes also referred to as a "spinner"). The front hub 48 aerodynamically contoured to promote an airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 so as to define a bypass airflow passage 56 therebetween.

During operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56 and a second portion of air 64 as indicated by arrow 64 is directed or routed into the core gas flowpath 37, or more specifically into the LP compressor 22. The ratio between the first portion of air 62 and the second portion of air 64 is commonly known as a bypass ratio. A pressure of the second portion of air 64 is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

It should be appreciated, however, that the exemplary gas turbine engine 10 depicted in FIG. 1 is by way of example only, and that in other exemplary embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18). Additionally, or alternatively, although the gas turbine engine 10 depicted is configured as a geared gas turbine engine (i.e., including the power gear box 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. It should also be appreciated that in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

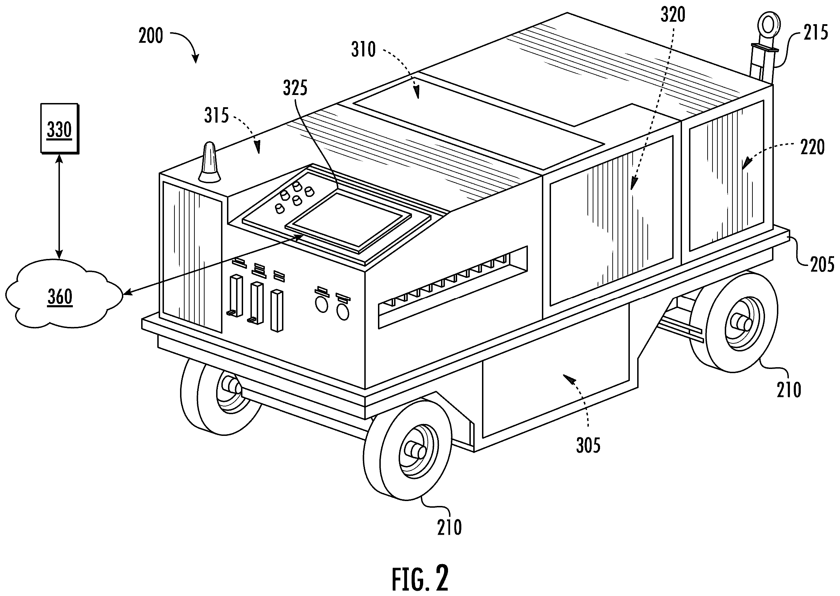

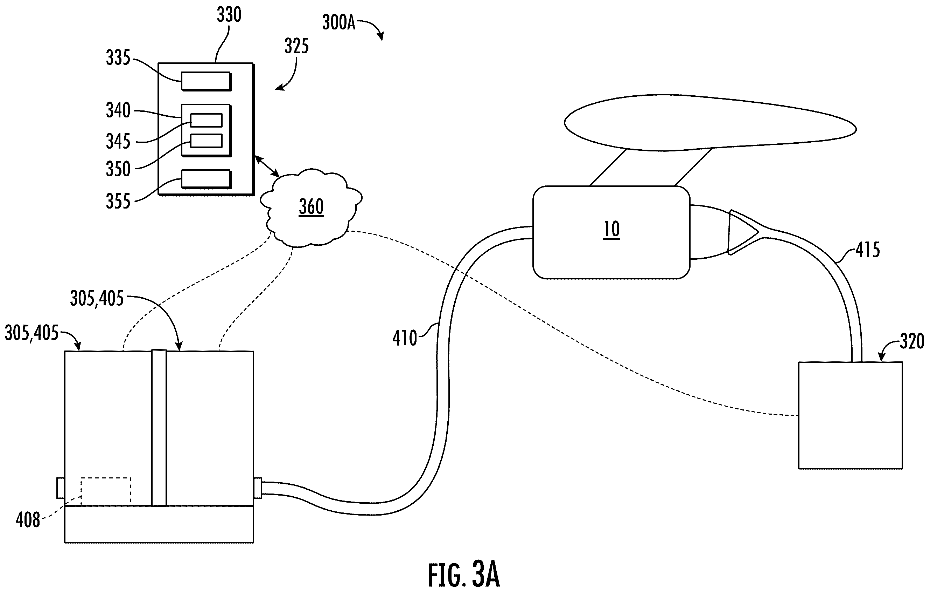

FIG. 2 is a perspective view of a modular cart 200 that may contain certain components of an exemplary wash system in accordance with an exemplary aspect of the present disclosure. As described in detail below, the modular cart 200 may be configured for housing some or all components of a wash system (which will be described in more detail below with reference to FIGS. 3A-3B). The wash system is generally configured for washing, rinsing, or otherwise cleaning a gas turbine engine, such as the gas turbine engine 10 (FIG. 1). Additionally, or alternatively, however, the wash system may be utilized with any other suitable gas turbine engine, such as a turbofan engine, turboprop engine, a turboshaft engine, turbojet engine, etc.

According to the exemplary illustrated embodiment, the wash system is configured as a modular system that is housed at least in part on or within the modular cart 200. As illustrated, the modular cart 200 includes a support frame 205 mounted on a plurality of wheels 210 to improve the mobility of the cart and facilitate quick and easy cleaning of gas turbine engine 10. In addition, the modular cart 200 may include a pivoting tug bar 215 such that the modular cart 200 may be towed by a vehicle to a desired location proximate to the gas turbine engine 10. Moreover, the modular cart 200 can contain various storage compartments 220 for storing all equipment necessary for cleaning the gas turbine engine 10 and other features for facilitating the quick and easy cleaning of the gas turbine engine 10.

FIG. 3A is a schematic view of an exemplary wash assembly, such as a wash system 300A, in accordance with an exemplary aspect of the present disclosure. More specifically, FIG. 3A provides a schematic view of the wash system 300A and its various cleaning modules in accordance with an exemplary embodiment of the present disclosure. For example, the wash system 300A includes one or more tank modules 305, a collection module 320, and a control system 325. In general, the tank modules 305 may store cleaning materials and the collection module 320 may collect and/or recycle waste wash fluid and foreign materials.

Each of the various modules are, for the embodiment depicted, operably connected to the control system 325. The control system 325 can include one or more computing device(s) 330. The computing device(s) 330 can include one or more processor(s) 335 and one or more memory device(s) 340. The one or more processor(s) 335 can include any suitable processing device, such as a microprocessor, microcontroller, integrated circuit, logic device, and/or other suitable processing device. The one or more memory device(s) 340 can include one or more computer-readable media, including, but not limited to, non-transitory computer-readable media, RAM, ROM, hard drives, flash drives, and/or other memory devices.

The one or more memory device(s) 340 can store information accessible by the one or more processor(s) 335, including computer-readable instructions 345 that can be executed by the one or more processor(s) 335. The instructions 345 can be any set of instructions that when executed by the one or more processor(s) 335, cause the one or more processor(s) 335 to perform operations. In some embodiments, the instructions 345 can be executed by the one or more processor(s) 335 to cause the one or more processor(s) 335 to perform operations, such as any of the operations and functions for which the control system 325 and/or the computing device(s) 330 are configured, the operations for operating the wash system 300A (e.g., method 500), as described herein, and/or any other operations or functions of the one or more computing device(s) 330. The instructions 345 can be software written in any suitable programming language or can be implemented in hardware. Additionally, and/or alternatively, the instructions 345 can be executed in logically and/or virtually separate threads on the one or more processor(s) 335. The one or more memory device(s) 340 can further store data 350 that can be accessed by the one or more processor(s) 335. For example, the data 350 can include data indicative of power flows, data indicative of engine/ aircraft operating conditions, and/or any other data and/or information described herein.

The computing device(s) 330 can also include a communications interface 355 used to communicate, for example, with the other components of the wash system 300A. The communications interface 355 can include any suitable components for interfacing with one or more network(s), including for example, transmitters, receivers, ports, controllers, antennas, and/or other suitable components. One or more devices can be configured to receive one or more commands from the computing device(s) 330 or provide one or more commands to the computing device(s) 330.

Moreover, the control system 325 may also be in communication (e.g., via the communications interface 355) with the various modules 305, 310, 315, 320, described below, and may selectively operate the wash system 300A in response to user input and feedback from these modules 305, 310, 315, 320. More specifically, for the embodiment depicted, the control system 325 is configured to communicate through a wireless communication network 360 through communications interface 355, such that the control system 325 may send or receive information and/or commands to or from the various modules 305, 310, 315, 320 of the exemplary wash system 300A wirelessly. It should also be appreciated, however, that in other embodiments, the control system 325 may additionally, or alternatively, use a wired communication bus to communicate with the various modules 305, 310, 315, 320.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

It should be appreciated that the modular cart 200 and the wash system 300A as described herein may allow for a more versatile cleaning system for a gas turbine engine, such as the gas turbine engine 10. For example, utilizing tank modules that are interchangeable may allow for extended washing operations, without having to refill a tank. Instead, once a given tank module has been utilized or depleted by the wash system 300A, a second tank module may be connected to the wash system 300A to allow for the washing operations to continue with minimal interruption. Similarly, utilizing a wash module that is interchangeable may allow for multiple wash operations to be completed on a given gas turbine engine without requiring two completely separate wash systems. In addition, according to exemplary embodiments of the present subject matter, a power module could be configured for providing compressed air and/or electrical power, e.g., when the wash system 300A is used in a location where such facilities are inconvenient or unavailable.

In at least one example embodiment, the one or more tank modules 305 may include at least one particulate reservoir 405 for storing a cleaning material. While the illustrated embodiment shows two particulate reservoirs 405, it should be understood that the one or more tank modules 305 may include any number of the particulate reservoirs 405.

The cleaning material stored in the particulate reservoir 405 may include a plurality of solid particulates. The cleaning material may also be at least partially frozen in some example embodiments. For example, the cleaning material stored in the particulate reservoir 405 may include a combination of ice and a detergent. More particularly, the cleaning material may include a combination of dry ice and detergent.

The wash system 300A includes a supply assembly, such as at least one particulate supply line 410, for supplying the cleaning material to an engine inlet the gas turbine engine 10 from the particulate reservoir 405. The at least one particulate supply line 410 may include one or more conduits or tubing. In at least one example embodiment, the at least one particulate supply line 410 supplies the cleaning material to the inlet 60 (FIG. 1) of the gas turbine engine 10. In other example embodiments, the at least one particulate supply line 410 may supply the cleaning material to one or more other inlets or ports defined by the gas turbine engine 10.

Moreover, the particulate reservoir 405 may include a particulate delivery device 408 for supplying a flow of the cleaning material, including the plurality of solid particulates, from the particulate reservoir 405 to the at least one particulate supply line 410. The particulate delivery device 408 may be disposed within or in fluid communication with the particulate reservoir 405. In at least one example embodiment, the particulate delivery device 408 provides a high velocity jet of compressed air or inert gas, which entrains the cleaning material and flows through the at least one particulate supply line 410. In additional example embodiments, the particulate delivery device 408 may include a valve-controlled gravity feed system configured to inject a desired quantity of the cleaning material into the at least one particulate supply line 410.

Additionally, the control system 325 may be operably coupled to the particulate reservoir 405, and the particulate delivery device 408, for controlling the supply of the cleaning material from the particulate reservoir 405 to the gas turbine engine 10 via the at least one particulate supply line 410.

In operation, the cleaning material is supplied to the gas turbine engine 10 via the at least one particulate supply line 410 and deposited on surfaces of one or more components of the gas turbine engine 10. For example, the flow of the cleaning mixture may be configured to flow similarly to a fluid when dispersed and may be disposed on surfaces of the compressor section (including the LP compressor 22 and the HP compressor 24), the combustion section 26, the turbine section (including the HP turbine 28 and the LP turbine 30), or a combination thereof. The cleaning material may be abrasive or non-abrasive and configured to remove dirt, debris, and other foreign materials disposed on components of the gas turbine engine 10. Moreover, one or more of the components of the gas turbine engine 10 may be rotated to ensure the cleaning material interacts with a larger surface area of the gas turbine engine 10. For example, the one or more components of the gas turbine engine 10 may be rotated by an electric machine or a hand crank. Moreover, the control system 325 may control rotation of the one or more components of the gas turbine engine 10.

In at least one example embodiment, the one or more components of the gas turbine engine 10 may be rotated at a rotational speed greater than or equal to 50 rotations per minute (RPM) and less than or equal to 1,000 RPM. For example, the one or more components of the gas turbine engine 10 may be rotated at a rotational speed greater than or equal to 100 rotations per minute (RPM) and less than or equal to 500 RPM. More particularly, the one or more components of the gas turbine engine 10 may be rotated at a rotational speed greater than or equal to 150 rotations per minute (RPM) and less than or equal to 300 RPM. However, it should be understood that additional rotational speeds are possible and within the scope of the present disclosure.

After washing the gas turbine engine 10, dirt, dust, and other foreign materials. as well as any excess cleaning material may be discharged from the gas turbine engine 10 to the collection module 320. As shown in FIG. 3A, the dirt, dust, other foreign materials, and any excess cleaning material may be supplied to the collection module 320 via a collection module supply line 415.The dirt, dust, other foreign materials, and any excess cleaning material may be disposed of or recycled from the collection module.

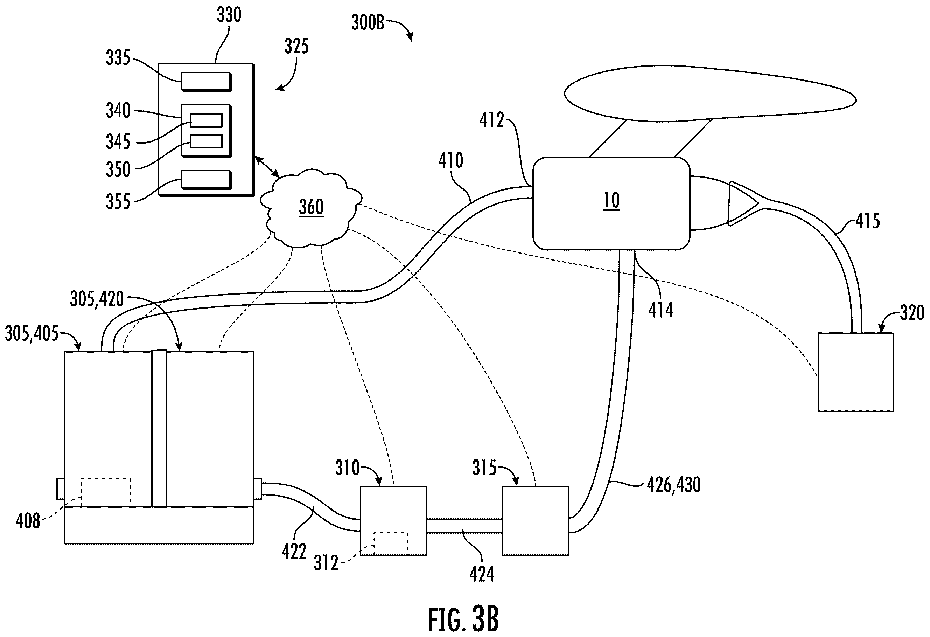

FIG. 3B is a schematic view of an exemplary wash assembly, such as a wash system 300B, in accordance with an exemplary aspect of the present disclosure. The wash system 300B may be similar or analogous to the exemplary wash system 300A discussed with respect to FIG. 3A. For example, the wash system 300B includes the one or more tank modules 305, including the particulate reservoir 405; the collection module 320; and the control system 325. Additionally, the wash system 300B includes a wash module 310, a foam wash module 315, and a detergent reservoir 420. In general, the tank modules 305 include a detergent reservoir 420 that may store wash fluid and other cleaning materials, the wash module 310 may receive and pressurize the wash fluid, and the foam wash module 315 may process the wash fluid to form a foamed wash fluid.

In at least one example embodiment, cleaning material is supplied from the particulate reservoir 405 to the gas turbine engine 10 via the at least one particulate supply line 410, as discussed above with respect to FIG. 3A. This may be referred to as a prewash operation.

During or after the prewash operation, the gas turbine engine 10 may be supplied with a water wash, foam wash, or wash fluid to further extract dirt, debris, and other materials from the gas turbine engine 10. The wash fluid wash may require little to no additional detergent. It should also be appreciated, that as used herein the term "fluid," "wash fluid," "wash liquid," and the like may refer to any suitable fluid for performing washing operations and/or rinsing the gas turbine engine 10. Such wash fluid is typically made up of water that may include other additives such as detergent, soap, or other treatments. For example, the wash fluid may refer to water, distilled water, or a combination of water or distilled water and one or more additives such as detergent, soap, corrosion inhibitors, surfactants, bis-tris, and other additives. Moreover, the wash system 300A is not limited to utilizing water or any particular detergent as a wash fluid. Instead, the wash system 300A may utilize any suitable wash liquid for performing desired washing operations of the gas turbine engine.

With reference to FIG. 3B, the detergent reservoir 420 contains the wash fluid. The detergent reservoir 420 is fluidly coupled to a wash module 310. For example, the detergent reservoir 420 may be in fluid communication with the wash module 310 via one or more fluid conduits or tubing. The wash module 310 is configured to receive a flow of the wash fluid 422 from the detergent reservoir 420. For example, the wash module 310 may include a pump 312 for receiving the flow of wash fluid 422 and generating a pressurized flow of the wash fluid 424. The control system 325 may be operably coupled to the detergent reservoir 420 and the wash module 310, and more particularly to a pump of the wash module 310, for controlling the flow of wash fluid 422 from the detergent reservoir 420 to the wash module 310.

Additionally, the wash module 310 is in fluid communication with the foam wash module 315. For example, the wash module 310 may be in fluid communication with the foam wash module 315 via one or more fluid conduits or tubing. However, it should be understood that in some embodiments, the wash module 310 and the foam wash module 315 may be integrated into a single, integral module. The foam wash module 315 is configured to receive the flow of wash fluid, such as the pressurized flow of the wash fluid 424, from the wash module 310 and generate a foam wash fluid. For example, the foam wash module 315 includes a foam generating device, or a foam generator, for generating a flow of the foamed wash fluid 426.

The foam generating device of the foam wash module 315 may generally be configured for mixing the flow of wash fluid 422 (or the pressurized flow of the wash fluid 424) with a stream of air to aerate the wash fluid and generate the flow of the foamed wash fluid 426. In this regard, for example, the flow of foamed wash fluid 426 may include wash fluid with a desired foam density, or a desired ratio of air to fluid. The foam may be characterized according to different properties as well. For example, the foam generating device may be configured for achieving a specific bubble distribution, foam viscosity, etc. The foam characteristics may be manipulated by adjusting a temperature or a flow rate of either the flow of wash fluid or the stream of air into the foam generating device. Moreover, the foamed wash fluid 426 may be formed primarily of distilled water.

The flow of the foamed wash fluid 426 may be supplied from the foam wash module 315 to the gas turbine engine 10 for cleaning by the supply assembly. For example, the supply assembly includes at least one wash supply line 430. The at least one wash supply line 430 may include one or more conduits or tubing. The at least one wash supply line 430 may be separate or fluidly isolated from the at least one particulate supply line 410. Moreover, the at least one wash supply line 430 may be configured to supply the flow of the foamed wash fluid 426 to one or more inlets or ports defined by the gas turbine engine 10. Additionally, the control system 325 may be operably coupled to the foam wash module 315 for controlling the flow of the foamed wash fluid 426 to the gas turbine engine 10 via the at least one wash supply line 430. In at least one example embodiment, the foamed wash fluid 426 is supplied to the gas turbine engine 10 after the plurality of particulates forming the cleaning mixture are supplied to the gas turbine engine 10. In other example embodiments, the foamed wash fluid 426 may be supplied to the gas turbine engine 10 simultaneously with the plurality of particulates forming the cleaning mixture.

With reference to FIG. 3B, the at least one particulate supply line 410 is in fluid communication with one or more first inlets 412 of the gas turbine engine 10, and the at least one wash supply line 430 is in fluid communication with one or more second inlets 414 of the gas turbine engine 10 different than the one or more first inlets 412. In other example embodiments, one or more of the at least one particulate supply line 410 and one or more of the at least one wash supply line 430 may be fluidly coupled to one or more of the same inlets of the gas turbine engine 10. For example, one or more of the at least one particulate supply line 410 and one or more of the at least one wash supply line 430 may be coupled to the one or more first inlets 412, the one or more second inlets 414, or both. In such example embodiments, at least a portion of the foamed wash fluid 426 and the cleaning material may be supplied to one or more of the same inlets of the gas turbine engine 10.

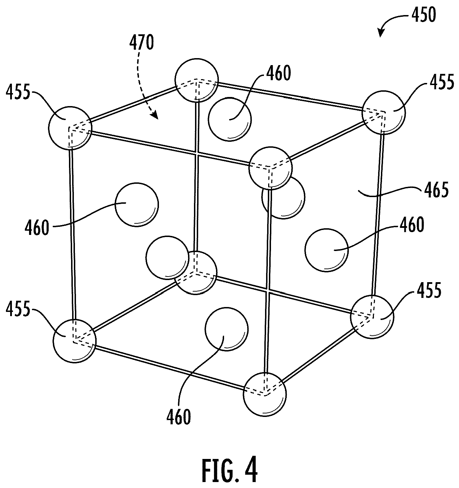

FIG. 4 is a detailed view of a particulate 450 of a plurality of particulates forming the cleaning mixture stored in the particulate reservoir 405 of the exemplary wash system 300A, 300B of FIGS. 3A-3B in accordance with an exemplary aspect of the present disclosure.

In at least one example embodiment, the particulate 450 includes a first plurality of particles 455 and a second plurality of particles 460. The first plurality of particles 455 may at least partially surround the second plurality of particles 460. For example, as shown in FIG.4, the first plurality of particles 455 may define an exterior 465 of the particulate 450 and the second plurality of particles may define or be disposed in an interior 470 of the particulate 450. Although the particulate 450 is shown having a cuboidal shape, it should be understood that the particulate 450 may also have spherical and other polygonal shapes.

The plurality of particulates forming the cleaning mixture, including the particulate 450, may be formed of ice and detergent. In at least one example embodiment, the first plurality of particles 455 are formed of ice and the second plurality of particles 460 include the detergent. The first plurality of particles 455 may include dry ice. For example, the particulate 450 may include a dry ice pellet enclosing the detergent, such as the foamed wash fluid 426. In such example embodiments, sublimation of the dry ice may improve cleaning due to the volume expansion, which dislodges more dust, debris, and foreign materials. The detergent may be in a liquid state or a solid state, such as in a frozen state. In some example embodiments, the detergent may include a hydrophilic aerogel powder. The hydrophilic aerogel powder may at least partially absorbs foreign materials, such as dust, on surfaces of the gas turbine engine 10. The hydrophilic aerogel powder may include crosslinked (bio)polymer aerogels, nanocellulose-based aerogels, silica aerogels, inorganic oxide aerogels, or a combination thereof. In additional example embodiments, the detergent forming the second plurality of particles 460 may include the foamed wash fluid encapsulated by the first plurality of particles 455. In other example embodiments, the detergent forming the second plurality of particles 460 may be coated in an organic material such that the first plurality of particles 455 include the organic material. The organic material may be a bio-degradable, water soluble, and environmentally friendly organic material, such as soy protein isolate, which may control pH while also providing thermal insulation for the detergent forming the second plurality of particles 460 prior to the wash process.

In some additional example embodiments, the first plurality of particles 455 may include the detergent and the second plurality of particles 460 may be formed of ice. In such example embodiments, the detergent may be in a liquid state. Moreover, the ice may include dry ice.

In other example embodiments, the particulate 450 may include the foamed wash fluid 426 converted into a solid crystal form. For example, the foamed wash fluid 426 may include a desired concentration of detergent before being converted to the solid crystal form.

The plurality of particulates, including the particulate 450, are configured to abrasively clean surfaces of one or more components of the gas turbine engine 10. For example, each particulate 450 of the plurality of particulates may release energy upon impact with surfaces for removal of debris and foreign materials. Upon impact, each particulate 450 may fragment. For example, the first plurality of particles 455 may break away and release the second plurality of particles 460 to provide additional cleaning.

Additionally, each particulate 450 of the plurality of particulates may have a rugged shape and texture suitable for abrasively cleaning the one or more components of the gas turbine engine 10. For example, the exterior 465 of each of the plurality of particulates forming the cleaning mixture, including the particulate 450, may be textured, providing ruggedness to improve abrasiveness of the plurality of particulates, which improves cleaning effectiveness of the gas turbine engine 10. Accordingly, the textured exterior aids in breaking up dirt, debris, and other foreign materials disposed on surfaces of the gas turbine engine 10, which weakens adhesion of such materials and enables quicker cleaning. Moreover, a porosity and density of the plurality of particulates forming the cleaning material varies. For example, one or more of the plurality of particulates may have a different porosity, density, or both compared to another one or more of the plurality of particulates.

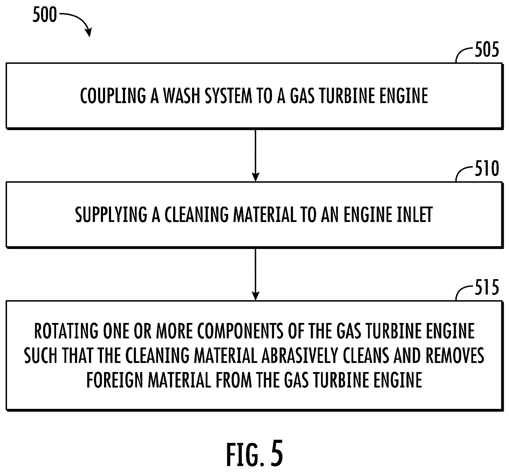

FIG. 5 provides a method 500 of cleaning the gas turbine engine 10 in accordance with an exemplary aspect of the present disclosure. More specifically, the method 500 of cleaning the gas turbine engine 10 may include cleaning the gas turbine engine 10 with the exemplary wash system 300A, 300B discussed with respect to FIGS. 3A-3B.

In at least one example embodiment, the method 500 includes coupling a wash system to a gas turbine engine at 505, supplying a cleaning material to an engine inlet at 510, and rotating one or more components of the gas turbine engine such that the cleaning material abrasively cleans and removes foreign materials from the gas turbine engine at 515.

Coupling a wash system to a gas turbine engine at 505 may include coupling the wash system 300A, 300B to at least one inlet of the gas turbine engine 10 via the at least one supply line. More specifically, the wash system 300A, 300B may be coupled to the inlet 60 of the gas turbine engine 10 (shown in FIG. 1) by the at least one particulate supply line 410 (shown in FIGS. 3A-3B). Moreover, the modular cart 200 discussed with respect to FIG. 2 may be positioned in proximity to the gas turbine engine 10 for coupling the at least one particulate supply line 410 of the wash system 300A, 300B to the at least one inlet, such as the inlet 60, of the gas turbine engine 10.

Supplying a cleaning material to an engine inlet at 510 may include supplying the plurality of particulates from the particulate reservoir 405 to the gas turbine engine 10 via the at least one particulate supply line 410. Each of the plurality of particulates may include the particulate 450 discussed with respect to FIG. 4. Moreover, the cleaning material may be deposited on surfaces of one or more components of the gas turbine engine 10. For example, the cleaning material may be deposited on surfaces of the compressor section (including the LP compressor 22 and the HP compressor 24), the combustion section 26, the turbine section (including the HP turbine 28 and the LP turbine 30), or a combination thereof of the gas turbine engine 10.

Rotating one or more components of the gas turbine engine such that the cleaning material abrasively cleans and removes foreign materials from the gas turbine engine at 515 includes transmitting kinetic energy to the cleaning material including the plurality of particulates for abrasively cleaning surfaces on the one or more components of the gas turbine engine 10. Such rotation may also ensure that the cleaning mixture is uniformly distributed and reaches a larger surface of the one or more components of the gas turbine engine 10 such that the cleaning material dislodges dirt, debris, and foreign materials disposed on the one or more components of the gas turbine engine 10. Accordingly, such rotation may further improve effectiveness of the cleaning operation.

In at least one example embodiment, supplying a cleaning material to an engine inlet at 510 and rotating one or more components of the gas turbine engine such that the cleaning material abrasively cleans and removes foreign materials from the gas turbine engine at 515 may be prewash operation for cleaning the gas turbine engine. In such embodiments, after performing the steps at 510 and 515, the method 500 may further include supplying the flow of wash fluid 422 from the detergent reservoir 420 to the wash module 310, aerating the wash fluid at the foam wash module 315, supplying the flow of foamed wash fluid 426 to the gas turbine engine 10, and depositing the foamed wash fluid on the one or more components of the gas turbine engine 10, as discussed with respect to FIG. 3B.

After cleaning, the method 500 may further include discharging any dirt, debris, and other foreign materials along with any excess cleaning materials from the gas turbine engine 10 to the collection module 320, as discussed above with respect to FIGS. 3A-3B.

Accordingly, the present disclosure provides wash systems for introducing cleaning material into gas turbine engines. The cleaning material may include solid particulates formed of one or more materials. For example, the solid particulates may include ice, such as dry ice, and detergent. The solid particulates may be introduced into the gas turbine engine and kinetic energy transferred thereto, such as by rotating one or more components of the gas turbine engine, such that the impact of the solid particulates breaks up and dislodges foreign material disposed on surfaces of the gas turbine engine. Rotation of the one or more components of the gas turbine engine may also further distribute the solid particulates such that the solid particulates to clean a larger surface area of the gas turbine engine. Moreover, the solid particulates may include a textured surface for providing increased abrasiveness of the solid particles, which improves cleaning of the surfaces of the gas turbine engine.

Further aspects are provided by the subject matter of the following clauses:

A wash system for washing a gas turbine engine, the wash system comprising: a particulate reservoir for storing a cleaning material, wherein the cleaning material is at least partially in a solid state and comprises a detergent, and wherein each particulate of the cleaning material comprises a first plurality of particles and a second plurality of particles different from the first plurality of particles, the first plurality of particles at least partially surrounding the second plurality of particles; and at least one particulate supply line coupled to the particulate reservoir and configured to supply the cleaning material to an engine inlet of the gas turbine engine.

The wash system of any preceding clause, wherein the first plurality of particles comprise ice or dry ice and the second plurality of particles comprise the detergent.

The wash system of any preceding clause, wherein the detergent is in a liquid state.

The wash system of any preceding clause, wherein the detergent is in a solid state.

The wash system of any preceding clause, wherein the detergent comprises a hydrophilic aerogel powder.

The wash system of any preceding clause, wherein the hydrophilic aerogel powder is configured to at least partially absorbs foreign material on surfaces of the gas turbine engine.

The wash system of any preceding clause, wherein the first plurality of particles comprise the detergent and the second plurality of particles comprises ice or dry ice.

The wash system of any preceding clause, wherein the detergent is in a liquid state.

The wash system of any preceding clause, wherein a density, a porosity, or both of one or more particulates of the cleaning material varies relative to another one or more particulates of the cleaning material.

The wash system of any preceding clause, wherein one or more components of the gas turbine engine are configured to rotate, and wherein the cleaning material is configured to abrasively clean surfaces of the one or more components of the gas turbine engine as the one or more components of the gas turbine engine rotates.

The wash system of any preceding clause, wherein the one or more components are configured to rotate at a rotational speed greater than or equal to 50 rotations per minute (RPM) and less than or equal to 1,000 RPM.

The wash system of any preceding clause, wherein the one or more components of the gas turbine engine include a compressor section, a combustion section, and a turbine section.

The wash system of any preceding clause, further comprising: a detergent reservoir for storing a wash fluid in fluid; a foam generating device in fluid communication with the detergent reservoir and configured for aerating a flow of the wash fluid to generate a flow of foamed wash fluid; and at least one wash supply line for supplying the flow of foamed wash fluid to the gas turbine engine.

The wash system of any preceding clause, further comprising: a detergent reservoir for storing a wash fluid; a foam generating device in fluid communication with the detergent reservoir and configured for aerating a flow of the wash fluid to generate a flow of foamed wash fluid; and at least one wash supply line for supplying the flow of foamed wash fluid to the gas turbine engine.

The wash system of any preceding clause, further comprising a particulate delivery device in fluid communication with the particulate reservoir and configured to supply the cleaning material from the particulate reservoir to the at least one particulate supply line.

A method for cleaning a gas turbine engine, the method comprising: coupling a wash system to at least one inlet of the gas turbine engine; supplying a cleaning material to an engine inlet of the gas turbine engine, wherein the cleaning material is at least partially -solid and comprises a detergent, and wherein the cleaning material comprises a first plurality of particles and a second plurality of particles different from the first plurality of particles, the first plurality of particles at least partially surrounding the second plurality of particles; and rotating one or more components of the gas turbine engine such that the cleaning material abrasively cleans and removes foreign material from the one or more components of the gas turbine engine.

The method of any preceding clause, further comprising: supplying a flow of wash fluid; aerating the flow of wash fluid to generate a flow of foamed wash fluid; and depositing the foamed wash fluid on the one or more components of the gas turbine engine after supplying the cleaning material.

The method of any preceding clause, wherein the depositing the foamed wash fluid on the one or more components of the gas turbine engine is performed after the rotating of the one or more components of the gas turbine engine.

The method of any preceding clause, wherein the rotating of the one or more components of the gas turbine engine transmits kinetic energy to the cleaning material for abrasively cleaning surfaces of the one or more components of the gas turbine engine.

The method of any preceding clause, wherein the rotating of the one or more components is at a rotational speed greater than or equal to 50 rotations per minute (RPM) and less than or equal to 1,000 RPM.

The method of any preceding clause, wherein the one or more components of the gas turbine engine comprise a compressor section, a combustion section, and a turbine section.

The method of any preceding clause, wherein a density, a porosity, or both of one or more particulates of the cleaning material varies relative to another one or more particulates of the cleaning material.

The method of any preceding clause, wherein the first plurality of particles comprise ice or dry ice and the second plurality of particles comprise the detergent.

The method of any preceding clause, wherein the detergent is in a liquid state.

The method of any preceding clause, wherein the detergent is in a solid state.

The method of any preceding clause, wherein the detergent comprises a hydrophilic aerogel powder.

The method of any preceding clause, wherein the hydrophilic aerogel powder is configured to at least partially absorbs foreign material on surfaces of the gas turbine engine.

The method of any preceding clause, wherein the first plurality of particles comprise the detergent and the second plurality of particles comprise ice or dry ice.

The method of any preceding clause, wherein the detergent is in a liquid state.

A wash assembly comprising: a gas turbine engine comprising a compressor section, a combustion section, and a turbine section defining at least in part a core gas flowpath, the gas turbine engine further defining an inlet to the core gas flowpath; and a wash system comprising; a particulate reservoir for storing a cleaning material, wherein the cleaning material is at least partially solid and comprises a detergent, and wherein each particulate of the cleaning material comprises a first plurality of particles and a second plurality of particles different from the first plurality of particles, the first plurality of particles at least partially surrounding the second plurality of particles; and a supply assembly comprising at least one supply line, the supply assembly in fluid communication with the particulate reservoir, and the inlet of the gas turbine engine for supplying the cleaning material to the inlet of the gas turbine engine.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A wash system (300A, 300B) for washing a gas turbine engine (10), the wash system (300A, 300B) comprising:
a particulate reservoir (405) for storing a cleaning material, wherein the cleaning material is at least partially in a solid state and comprises a detergent, and wherein each particulate (450) of the cleaning material comprises a first plurality of particles (455) and a second plurality of particles (460) different from the first plurality of particles (455), the first plurality of particles (455) at least partially surrounding the second plurality of particles (460); and
at least one particulate supply line (410) coupled to the particulate reservoir (405) and configured to supply the cleaning material to an engine inlet of the gas turbine engine (10).

2. The wash system (300A, 300B) of claim 1, wherein the first plurality of particles (455) comprise ice or dry ice and the second plurality of particles (460) comprise the detergent.

3. The wash system (300A, 300B) of claim 2, wherein the detergent is in a liquid state or a solid state.

4. The wash system (300A, 300B) of claim 2, wherein the detergent comprises a hydrophilic aerogel powder, and wherein the hydrophilic aerogel powder is configured to at least partially absorbs foreign material on surfaces of the gas turbine engine (10).

5. The wash system (300A, 300B) of claim 1, wherein the first plurality of particles (455) comprise the detergent and the second plurality of particles (460) comprises ice or dry ice; and wherein the detergent is in a liquid state.

6. The wash system (300A, 300B) of any preceding claim, wherein a density, a porosity, or both of one or more particulates of the cleaning material varies relative to another one or more particulates of the cleaning material.

7. The wash system (300A, 300B) of any preceding claim, wherein one or more components of the gas turbine engine (10) are configured to rotate, and wherein the cleaning material is configured to abrasively clean surfaces of the one or more components of the gas turbine engine (10) as the one or more components of the gas turbine engine (10) rotates.

8. The wash system (300A, 300B) of any preceding claim, further comprising:
a detergent reservoir (420) for storing a wash fluid (422);
a foam generating device in fluid communication with the detergent reservoir (420) and configured for aerating a flow of the wash fluid (422) to generate a flow of foamed wash fluid (426); and
at least one wash supply line (430) for supplying the flow of foamed wash fluid (426) to the gas turbine engine (10).

9. A method for cleaning a gas turbine engine (10), the method comprising:
coupling a wash system (300A, 300B) to at least one inlet of the gas turbine engine (10);
supplying a cleaning material to an engine inlet of the gas turbine engine (10), wherein the cleaning material is at least partially solid and comprises a detergent, and wherein the cleaning material comprises a first plurality of particles (455) and a second plurality of particles (460) different from the first plurality of particles (455), the first plurality of particles (455) at least partially surrounding the second plurality of particles (460); and
rotating one or more components of the gas turbine engine (10) such that the cleaning material abrasively cleans and removes foreign material from the one or more components of the gas turbine engine (10).

10. The method of claim 9, further comprising:
supplying a flow of wash fluid (422);
aerating the flow of wash fluid (422) to generate a flow of foamed wash fluid (426); and
depositing the foamed wash fluid (426) on the one or more components of the gas turbine engine (10) after supplying the cleaning material.

11. The method of claim 10, wherein the depositing the foamed wash fluid (426) on the one or more components of the gas turbine engine (10) is performed after the rotating of the one or more components of the gas turbine engine (10).

12. The method of any of claims 9 to 11, wherein the rotating of the one or more components of the gas turbine engine (10) transmits kinetic energy to the cleaning material for abrasively cleaning surfaces of the one or more components of the gas turbine engine (10).

13. The method of any of claims 9 to 12, wherein a density, a porosity, or both of one or more particulates of the cleaning material varies relative to another one or more particulates of the cleaning material.

14. The method of any of claims 9 to 13, wherein the first plurality of particles (455) comprise ice or dry ice and the second plurality of particles (460) comprise the detergent, and wherein the detergent is in a liquid state or a solid state.

15. The method of any of claims 9 to 13, wherein the first plurality of particles (455) comprise the detergent and the second plurality of particles (460) comprise ice or dry ice, and wherein the detergent is in a liquid state.
